(19)

Europäisches
Patentamt
European
Patent Office
Office européen
des brevets

(11) **EP 4 361 437 A1**

(12) **EUROPEAN PATENT APPLICATION**

(43) Date of publication:
**01.05.2024 Bulletin 2024/18**

(21) Application number: **22204071.9**

(22) Date of filing: **27.10.2022**

(51) International Patent Classification (IPC):
***F03H 1/00*** *(2006.01)*

(52) Cooperative Patent Classification (CPC):
**F03H 1/0043; F03H 1/005**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FOTEC Forschungs- und
Technologietransfer GmbH
2700 Wiener Neustadt (AT)**

(72) Inventor: **BULDRINI, Nembo
2486 Pottendorf (AT)**

(74) Representative: **Weiser & Voith
Patentanwälte Partnerschaft
Kopfgasse 7
1130 Wien (AT)**

(54) **ION SOURCE AND METHOD FOR OPERATING THE SAME**

(57)     What is disclosed is an ion source, in particular an ion thruster for propelling a spacecraft, comprising a reservoir (2) for a liquid metal (3), an emitter (4) with a central axis (C) and in fluid communication with the reservoir (2) for emitting ions (5) of liquid metal (3) drawn from the reservoir (2), an annular extractor (6) coaxial to and facing the emitter (4) for accelerating the ions (5) away, a voltage source (7) for effecting said emitting and accelerating, and a chassis (10) mounting the reservoir (2), the emitter (4) and the extractor (6), wherein the extractor (6), on a side (15) facing the emitter (4), has a structure (14) configured to absorb liquid metal (3) by capillary forces. Also disclosed is a method (21) for operating the ion source (1).

*Fig. 3*

EP 4 361 437 A1

**Description**

The present invention relates to an ion source, in particular an ion thruster for propelling a spacecraft, and to a method for operating the same. The ion source comprises a reservoir for a liquid metal, an emitter having a central axis and being in fluid communication with the reservoir for drawing liquid metal from the reservoir and emitting ions of the liquid metal, an annular extractor coaxial to and facing the emitter for accelerating the ions away from the emitter, a voltage source electrically connected to the emitter and the extractor for effecting said emitting and accelerating, and a chassis mounting the reservoir, the emitter and the extractor.

Ion sources are used, e.g., for ion implantation or for creating focussed ion beams in semiconductor industry, in metal finishing, in material science and/or analysis, or as ion thrusters for propelling spacecraft. In ion sources that emit liquid metal, also known as "liquid metal ion sources" ("LMIS"), the liquid metal (usually either caesium, indium, gallium, mercury or bismuth) is heated to its liquid state in the reservoir and drawn therefrom by the emitter from which ions of the liquid metal are electrically extracted and accelerated by the extractor to form a directed beam of metal ions. The emitter of the LMIS has one or more emission sites, typically projections in the shape of cones, pyramids, triangular prisms, or the like. To achieve a high electric field strength at the emission sites, which is a basis for ion emission, the projections are generally sharp-tipped or sharp-edged to utilize the field-concentrating effect of the tip or edge. Applying the electric field to such a sharp tip or edge causes the formation of a so-called Taylor cone on top of the tip or edge of the emitter's projection; neutral atoms of liquid metal at the apex of the Taylor cone evaporate from the surface, due to field emission negative electrons tunnel back to the surface changing the formerly neutral atoms to positively charged ions. The thusly created ions are accelerated by the electric field.

This principle of creating positive ions and accelerating them by the very same electric field is used to generate the directed ion beam and, in ion thrusters, a thrust. Such ion thrusters are, thus, also known as field-emission electric propulsion (FEEP) systems. The ion-beam and, when applicable, the thrust can be accurately controlled by the strength of the electric field. As moving parts are avoided, LMIS are beneficial due to their low complexity and weight and their high reliability, durability and efficiency.

For transporting liquid metal from the reservoir to the sharp tip or edge of each projection of the emitter, passive forces, like capillary effects produced by capillary channels penetrating the emitter or by a porous emitter and/or adhesion effects on the wetting surface of the emitter's projections, are usually employed in LMIS.

Apart from the directed ion beam an ion source of the abovementioned type also produces an undesirable, substantially omnidirectional spray of neutral or weakly charged droplets of the liquid metal during operation. While the spray is insignificant for the operation of the ion source as such, droplets gradually deposit on surfaces surrounding the emitter. The extractor is mostly impacted by this deposition as it faces the emitter and attracts positively charged particles. Over time, the deposition on the extractor accretes in the direction of the emitter in a way that the deposited metal eventually comes into contact with the emitter. This incident is often referred to as "clogging" and causes a catastrophic failure of the ion source, which is permanent, particularly in case of an ion thruster in a spacecraft.

It is an aim of the present invention to provide an LMIS that is more reliable by preventing or at least substantially delaying clogging.

According to a first aspect of the invention this aim is achieved by an ion source specified at the outset, which is distinguished in that the extractor, on a side facing the emitter, has a structure configured to absorb liquid metal by means of capillary forces.

In such an ion source, liquid metal that undesirably accumulates on the extractor is diffused away from the emitter and absorbed by the structure of the extractor. To this end, the structure, at least its portions potentially in contact with the liquid metal, is wettable by the respective liquid metal, e.g. made from a wettable material or coated therewith. As a consequence, clogging is largely prevented.

In a first beneficial embodiment the absorbent structure is constituted by a plurality of fins spaced apart from each other to form (capillary) gaps therebetween. Thereby, the liquid metal is absorbed in the respective gaps between neighbouring fins, while the finned design of the extractor does not impair the function and normal operation of the extractor and the ion source.

The fins and, thus, the gaps may extend in any manner away from the emitter and its central axis, e.g., forming a spiral or the like when seen in the direction of the central axis. In an advantageous variant the gaps extend radially away from the central axis. This fosters a quick absorption of liquid metal and its diffusion away from the emitter.

It is particularly favourable when the width of each gap is constant with increasing distance from the central axis. Thereby, the capillary effect is constant.

Each fin may, e.g., be orthogonal or inclined with respect to the central axis. In a beneficial variant each fin is parallel to the central axis. This helps to achieve a large gap volume between each two neighbouring fins; the shape of the fins is of low complexity and the fins are easy to manufacture.

In an alternative second embodiment of the ion source the absorbent structure is constituted by a plurality of (capillary) pores in the extractor. The pores may either stem from using a porous material for creating the extractor or from manufacturing pores into the extractor, e.g. by drilling, etching etc. The liquid metal is absorbed in the pores and, thus, diffused away from the emitter.

In a third alternative embodiment, the absorbent structure is constituted by a plurality of (capillary) grooves on the surface of the extractor. While the capillary effect of the grooves is generally weaker than that of pores or fin-gaps it may be easier to manufacture grooves on a surface, e.g. by carving or etching.

Like the fins and gaps the grooves may extend in any manner away from the emitter and its central axis, e.g., forming a spiral or the like when seen in the direction of the central axis. In a beneficial variant the grooves extend radially away from the central axis.

In a particularly advantageous variant the grooves furcate with increasing distance from the central axis. Thereby, the volume of liquid metal that can be absorbed by the extractor is increased.

For further increasing the volume of liquid metal that can be absorbed, it is beneficial when the extension of the extractor in axial direction increases with increasing distance from the central axis. The absorption volume is thereby increased, in particular in the embodiments of a finned or a porous extractor; this effect is independent of whether the gap width between neighbouring fins is constant, widening or narrowing with increasing distance from the central axis.

To avoid electron emission from the extractor towards the emitter it is beneficial when the extractor, on said side facing the emitter, is rounded when seen transverse to the central axis. This prevents an undesirable field-concentration due to sharp tips or edges of the extractor on its side facing the emitter.

In a favourable embodiment the emitter has a plurality of sharp-tipped or sharp-edged emission sites arranged axially symmetric and projecting parallel to the central axis. An emitter of this type results in an ion source that allows a higher ion emission than an emitter with a single emission site. Still, accurate control of the ion emission by adjusting the electric field between the emitter and extractor by means of the voltage source is easily achieved.

To avoid or reverse solidification of the liquid metal depositing on the extractor the extractor may be heated. In an advantageous embodiment the voltage source is switchable between an operating mode, in which it applies a first extractor potential to the extractor and a first emitter potential to the emitter, and a cleaning mode, in which it applies a second extractor potential to the extractor and a second emitter potential to the emitter, wherein the first extractor potential is higher than the second extractor potential and the first emitter potential is higher than the second emitter potential, each in relation to a potential of the chassis. While the ions of the liquid metal are essentially emitted and accelerated away from the emitter in the operating mode, the emitted ions are largely attracted by the extractor in the cleaning mode such that the extractor and any (originally liquid) metal solidified thereon are heated by the impinging ions. In a further advantageous embodiment, the ion source alternatively or additionally comprises a heater, preferably an electric heater, for heating the extractor in the cleaning mode. Therein, the extractor may either be in direct thermal connection with the heater or be indirectly heated via heat radiation from the emitter being heated by said heater. When heating the metal above its liquefying temperature, the capillary forces of the extractor's structure take effect. The liquefied metal accumulated on the extractor's side facing the emitter is absorbed in the structure and, thus, diffused away from the emitter.

The cleaning mode can, e.g., be activated after a predetermined time of operation of the ion source or when a specific deposition limit of solidified metal is reached on the extractor.

In a second aspect the invention provides a method for operating an ion source of the abovementioned type, the method comprising:

firstly, in an operating mode, applying a first extractor potential to the extractor and a first emitter potential to the emitter, and

secondly, in a cleaning mode, applying a second extractor potential to the extractor and a second emitter potential to the emitter,

wherein the first extractor potential is higher than the second extractor potential and the first emitter potential is higher than the second emitter potential, each in relation to a potential of the chassis of the ion source.

With respect to the advantages and further embodiments of the method reference is made to the above statements on the ion source.

In a beneficial variant of the method the first extractor potential is between -10 kV and 0 V, preferably at -5 kV, the first emitter potential is between +10 kV and +20 kV, preferably at +15 kV, the second extractor potential is between -25 kV and -15 kV, preferably at -20 kV, and the second emitter potential is between -5 kV and +5 kV, preferably at 0 V, each in relation to the potential of the chassis. Thereby, both an efficient operation of the ion source and an effective cleaning of the extractor are achieved.

The invention shall now be described in detail on the basis of an exemplary embodiment thereof with reference to the accompanying drawings which show:

Figs. 1a and 1b an ion source according to the state of the art in a top view (Fig. 1a) and a longitudinal section thereof along line A-A of Fig. 1a (Fig. 1b);

Fig. 2 the emitter and the extractor of the ion source of Figs. 1a and 1b in a top view, wherein emitted liquid metal has deposited on the extractor;

Fig. 3 a first embodiment of the emitter and the extractor of an ion source according to the present invention, the extractor having fins and gaps therebetween, in a top view;

Fig. 4 the extractor of Fig. 3 in a perspective sectional view;

Fig. 5 a second embodiment of the emitter and the extractor of an ion source according to the present invention, the extractor having pores, in a top view;

Fig. 6 the extractor of Fig. 5 in a perspective sectional view;

Fig. 7 a third embodiment of the emitter and the extractor of an ion source according to the present invention, the extractor having a grooved surface, in a top view;

Fig. 8 a method for operating the ion sources of Figs. 3, 5 or 7 in a flowchart; and

Fig. 9 the detail B of the extractor of Fig. 3 in different states of absorption of liquid metal in one and the same drawing.

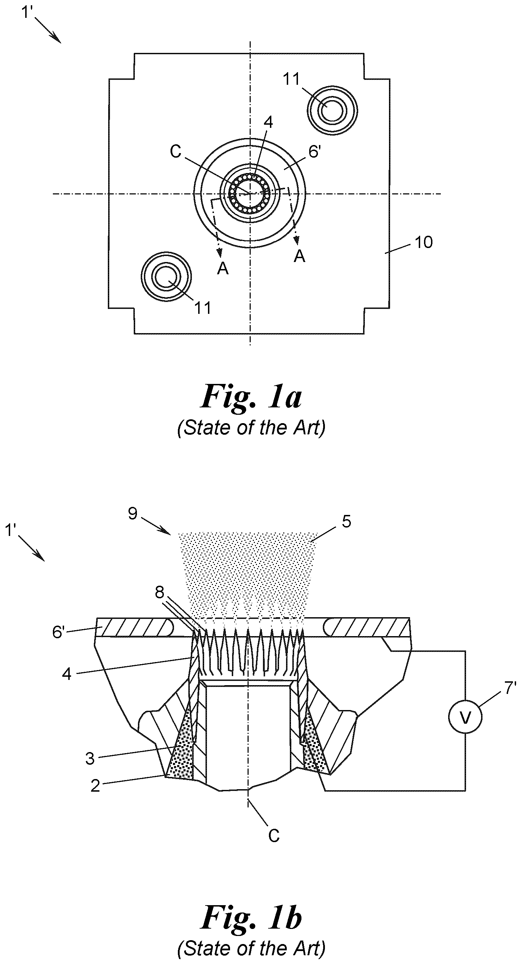

Figs. 1a and 1b show a conventional ion source 1' which has a reservoir 2 containing a metal 3 in its liquid state, e.g. liquid cesium, indium, gallium, mercury, bismuth etc. The ion source 1' comprises an emitter 4 which has a central axis C and is in fluid communication with the reservoir 2. The emitter 4 draws liquid metal 3 from the reservoir 2 in order to emit ions 5 of the liquid metal 3. For emitting ions 5 of the liquid metal 3 and for accelerating the ions 5 away from the emitter 3 the ion source 1' comprises an annular extractor 6' which is arranged coaxially with the emitter 4 and faces the emitter 4 (here: with its inner circumference).

A voltage source 7' is electrically connected to the emitter 4 and the extractor 6' and applies a high voltage of a few kilovolts (kV) between the emitter 4 and the extractor 6', resulting in a strong electric field therearound.

The emitter 4 may have one or more emission sites 8, each of which is a projection in the shape of a cone, a pyramid, a triangular prism, a needle or the like with a sharp tip or edge which projects parallel to the central axis C away from the reservoir 2. Applying the strong electric field to the sharp tip or edge causes the formation of a so-called Taylor cone on top of the tip or edge of each emission site 8. At the apex of the Taylor cone the ions 5 are emitted and accelerated by the strong electric field between the extractor 6' and the emitter 4, creating an ion beam 9 that is directed away from the emitter 4 and from the ion source 1'.

The ion source 1' also comprises a chassis 10 which mounts the reservoir 2, the emitter 4 and the extractor 6'. The voltage source 7' may be mounted on the chassis 10 or separately.

Ion sources 1' of this type are known as liquid metal ion sources ("LMIS"). LMIS are used, e.g., for implanting ions or for creating focused ion beams in semiconductor industry, in metal finishing, in material science and/or analysis, or as an ion thruster for propelling a spacecraft. When the ion source 1' of Figs. 1a and 1b is used as an ion thruster it may be equipped with optional neutralizers 11, i.e. electron sources.

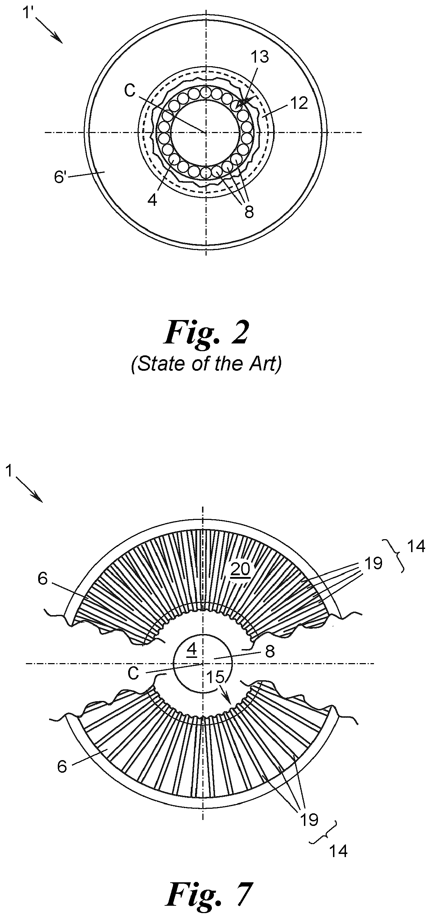

Fig. 2 shows the emitter 4 and the extractor 6' of the ion source 1' of Fig. 1a after some time of operation. While most of the liquid metal 3 was accelerated away from the emitter 4 by the strong electric field, the ion source 1' also produced an undesirable, substantially omni-directional spray of neutral or weekly charged droplets of the liquid metal 3 which deposited on surfaces surrounding the emitter 4. As the extractor 6' faces the emitter 4 and is typically negatively charged during operation, it attracts positively charged particles and is mostly impacted by deposition 12 of liquid metal 3. The liquid metal 3 usually solidifies on the extractor 6' and gradually accretes as a metal deposition 12 on the extractor 6' in the direction of the emitter 4. Eventually, the metal deposition 12 comes into contact with the emitter 4 (as symbolized by arrow 13 in Fig. 2), causing a catastrophic failure of the ion source 1'.

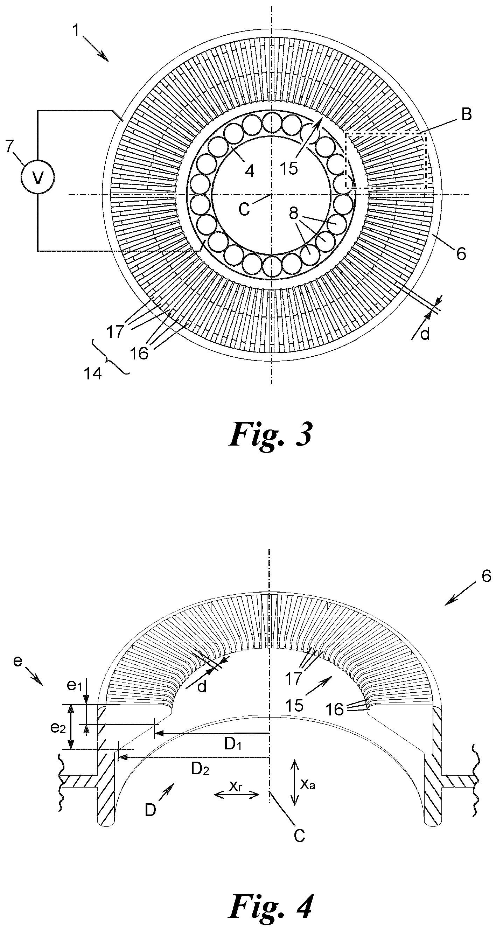

On the basis of the example of Figs. 3 to 9, a different ion source 1 is proposed herein that helps to avoid or at least substantially delay such an incident. Elements that are equal or essentially equal have the same reference numerals as in Figs. 1a, 1b and 2; similar elements that differ only in specific features are differentiated by an apostrophe in the reference numerals of Figs. 1a, 1b and 2. However, resembling functions and details that have already been described above will not be repeated below.

The ion source 1 differs from the ion source 1' in particular by an annular extractor 6 which, on its side 15 facing the emitter 4, has a structure 14 that is configured to absorb liquid metal 3 by means of capillary forces.

In a first embodiment shown in Figs. 3 and 4, said structure 14 is constituted by a plurality of fins 16 which are spaced apart from each other and, consequently, form capillary gaps 17 therebetween, i.e. each gap 17 lies between two neighbouring fins 16. Liquid metal 3 depositing on the extractor 6 is absorbed in the gaps 17 and, thereby, diffuses away from the side 15 of the extractor 6 facing the emitter 4 and, thus, away from the emitter 4. To this end, the fins 16 or at least their respective surfaces inside the gaps 17 are either made of or coated with a material that is wettable by the liquid metal 3 and the gap width d of the gaps 17 is chosen to foster the capillary effect they produce. In the case of, e.g., liquid indium being used as the liquid metal 3 the gap width d may be chosen in the range of 1 millimeter (mm) or less, for example about 0,4 mm. Optionally, the gap width d can be estimated on the basis of a raise h of the liquid metal 3 to be achieved against gravity according to

$$d = \frac{2\gamma}{\rho g h} \qquad\qquad (1)$$

with:

g    gravity constant,
$\gamma$    coefficient of surface tension of the liquid metal 3, and
$\rho$    the density of the liquid metal 3.

In the embodiment of Fig. 3, the gaps 17 extend radially away from the central axis C of the emitter 4. Alternatively, each gap 17 may be inclined to a radial direction $x_r$ of the extractor 6 such that all gaps 17 form a spiral-like shape around the central axis C having curved or straight spiral legs.

It goes without saying that, as each gap 17 is merely a consequence of the separation between two neighboring fins 16, the shape of the gaps 17 is defined by the fins 16 and their shapes and mutual arrangement.

With increasing distance D from the central axis C the width d of each gap 17 may also increase for increasing the volume of liquid metal 3 that can be absorbed. Alternatively, each gap 17 may decrease in gap width d with increasing distance D from the central axis C for increasing the capillary force exerted on the liquid metal 3. In a further alternative shown in Fig. 3, the width d of each gap 17 is constant with increasing distance D from the central axis C. In this case, the fins 16 are wedge-shaped when seen in an axial direction $x_a$ of the extractor 6, i.e. get thicker with increasing distance D from the central axis C.

Fig. 4 illustrates an optional example in which the extension e of each fin 16 in axial direction $x_a$ increases with increasing distance D from the central axis C. I.e., an extension $e_1$ at a distance $D_1$ from the central axis C is smaller than an extension $e_2$ at a larger distance $D_2$. Alternatively, each fin 16 may have a constant, decreasing or even varying extension e in axial direction $x_a$ with increasing distance from the central axis C.

Moreover, the fins 16 may be orthogonal to the central axis C. In this case each fin 16 is a disc with a central hole, the discs being arranged one on top of and spaced apart from each other to form the gaps 17 therebetween. Alternatively, the fins 16 may be inclined with respect to the central axis C, forming helical gaps 17 therebetween. In the present example, however, each fin 16 is parallel to the central axis C.

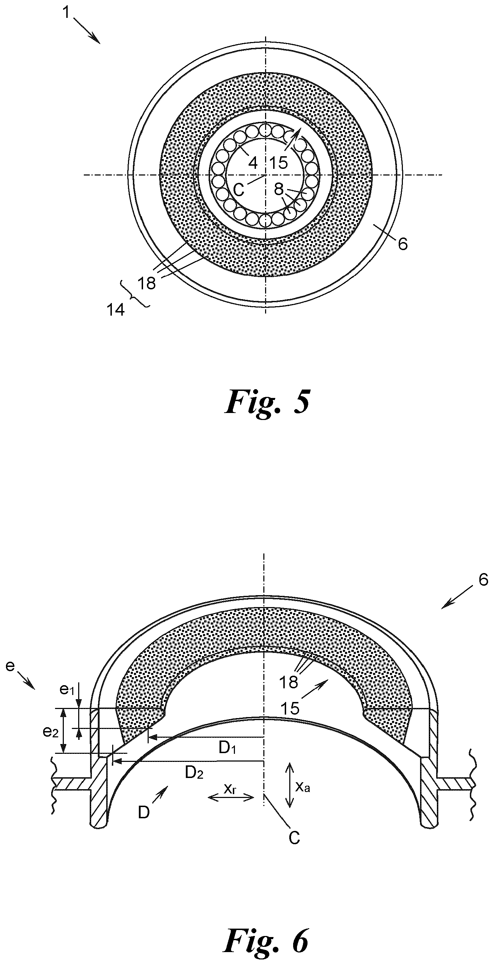

In a second embodiment of the extractor 6 illustrated in Figs. 5 and 6, the abovementioned structure 14 is constituted by a plurality of capillary pores 18 in the extractor 6, i.e., the porous extractor 6 of this embodiment works like a sponge absorbing liquid metal 3 by means of capillary forces of its pores 18. Apart therefrom, the extractor 6 of the second embodiment may have any shape as described above for the extractor 6 of the first embodiment, e.g. it may optionally have an extension e in axial direction $x_a$ that increases with increasing distance D from the central axis C as depicted in Fig. 6.

In a third alternative embodiment according to Fig. 7 said structure 14 of the extractor 6 is constituted by a plurality of capillary grooves 19 on the surface 20 of the extractor 6. The grooves 19 may have, e.g., a semi-circular, rectangular, triangular etc. cross-section and be carved, cast, etched or otherwise formed into the surface 20 of the extractor 6. The grooves 19 may extend radially away from the central axis C of the emitter 4 as shown in Fig. 7. Alternatively, each groove 19 may be inclined to the radial direction forming a spiral-like shape around the central axis C having curved or straight spiral legs. In a further alternative, the grooves 19 may meander away from the emitter 4.

In a variant of the grooves 19 depicted in the bottom half of Fig. 7, each groove 19 is simply straight; in an alternative variant depicted in the top half of Fig. 7 the grooves 19 furcate (bifurcate or multi-furcate) with increasing distance D from the central axis C.

Apart from the different structure 14, the extractor 6 of the third embodiment may have any shape as described above for the respective extractors 6 of the first and second embodiments.

The extractor 6 may optionally be rounded on its side 15 facing the emitter 4 when seen transverse to the central axis C as shown in Figs. 4 and 6. However, the extractor 6 may alternatively have a different, in particular a non-rounded shape.

As shortly indicated above, the emitter 4 may have one or more sharp-tipped or sharp-edged emission sites 8 which are arranged in an axial symmetry to the central axis C and project parallel thereto. In the examples of Figs. 3 and 5, the emitter 4 is crown-shaped having a plurality of emission sites 8 arranged in a circle around the central axis C. However, different arrangements of the emission site(s) 8 are possible, e.g., in an array etc. Fig. 7 shows an example in which the emitter 4 has a single, central emission site 8. In any case, the extractor 6 has an annular shape which corresponds to the arrangement of the emissions site(s) 8 to generate the strong electric field in concert with the coaxial emitter 4.

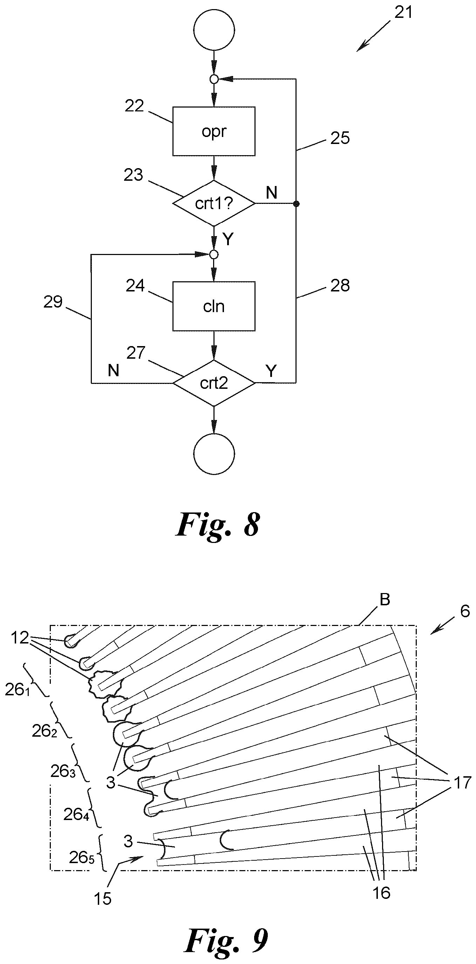

Figs. 8 and 9 illustrate a method 21 for operating the ion source 1. According to Fig. 8, the voltage source 7 may first be switched to an operating mode 22. In the operating mode 22 the ions 5 of the liquid metal 3 are emitted and accelerated away from the emitter 4. To this end, the voltage source 7 applies a first extractor potential to the extractor 6 and a first emitter potential to the emitter 4. The first extractor potential is typically between -10 kV and 0 V in relation to a potential of the chassis 10 and the first emitter potential is typically between +10 kV and +20 kV (also in relation to the potential of the chassis 10). In an exemplary embodiment, the first extractor potential is between -3 kV and -8 kV, e.g. at - 5 kV, and the first emitter potential is between +12 kV and +17 kV, e.g. at +15 kV, each in relation to the potential of the chassis 10.

When the voltage source 7 has been in operating mode 22 for a predetermined period of time or when excessive metal deposition 12 is sensed on the side 15 of the extractor 6 facing the emitter 4 (e.g. by machine vision) or upon any (other) predetermined criterion $crt_1$, cf. decision block 23, the voltage source 7 may be switched into a cleaning mode 24 (branch "Y" in block 23); otherwise, the voltage source 7 may stay in operating mode 22 (branch "N" in block 23 and loop 25).

In the cleaning mode 24, ions 5 emitted by the emitter 5 are predominantly attracted by the extractor 6 instead of accelerating them away from the ion source 1. Thereby, the extractor 6 will heat-up due to ion bombardment, i.e. due to ions 5 attracted by and impinging on the extractor 6, concurrently liquefying the solidified metal deposition 12 on the extractor 6. To this end, the voltage source 7 applies a second extractor potential to the extractor 6 and a second emitter potential to the emitter 4. The first extractor potential is higher than the second extractor potential and the first emitter potential is higher than the second emitter potential, each in relation to the potential of the chassis 10. Relative to the potential chassis 10, the second extractor potential is typically between -25 kV and -15 kV, e.g. at -20 kV, and the second emitter potential is between -5 kV and +5 kV, e.g. at 0 V.

The effects of the operating and cleaning modes 22, 24 on the metal deposition 12 are illustrated (for the embodiment of the extractor having fins 16 and gaps 17 therebetween) in Fig. 9 in one and the same drawing for different stages of metal deposition/accretion in different sectors $26_1, 26_2, ..., 26_5$ of the extractor 6. It is understood that these different stages usually do not occur simultaneously.

The beginning of metal deposition 12 on the side 15 of the fins 16 of the extractor 6 facing the emitter 4 is depicted in sector $26_1$. This usually occurs during operation of the ion source 1 in the operating mode 22.

The accreted metal deposition 12 in sector $26_2$ is already considerable and the metal is solidified.

Sector $26_3$ shows the metal deposition 12 of sector $26_2$ which has been liquefied to drops of liquid metal 3 on the side 15 of the extractor fins 16 in the cleaning mode 24.

The drops of liquid metal 3 on neighbouring fins 16 will, when sufficiently large, merge as depicted in sector $26_4$.

Due to the capillary effect, the merged drops of liquid metal 3 will be absorbed by the gaps 17 and diffused away from the emitter 4 as shown in sector $26_5$ such that the side 15 of the extractor 6 facing the emitter 4 is cleaned.

After having cleaned the side 15 of extractor 6 facing the emitter 4, e.g. after a predetermined period of time or when sensing sufficient cleaning or upon a (different) predetermined criterion $crt_2$ (Fig. 8), cf. decision block 27, the voltage source 7 may be switched back to operating mode 22 (branch "Y" in block 27 and loop 28); otherwise, the cleaning mode 24 will be continued (branch "N" in block 27 and loop 29).

It is understood, that the same method 21 of operating the ion source 1 may likewise be applied to an extractor 6 having a different structure 14, in particular the abovementioned pores 18 or grooves 19. Moreover, the extractor 6 can alternatively or additionally be heated by a heater, e.g. electric heater, in cleaning mode 24, wherein the extractor 6 can either be in direct thermal connection with such a heater or be indirectly heated via heat radiation from the emitter 4 being heated accordingly. Furthermore, the voltage source 7 may be idled or switched off when neither operation nor cleaning of the ion source 1 is required.

The present invention is not restricted to the specific embodiments described in detail herein, but encompasses those variants, combinations and modifications thereof, that fall within the scope of the appended claims.

## Claims

1. An ion source, in particular an ion thruster for propelling a spacecraft, comprising

a reservoir (2) for a liquid metal (3),
an emitter (4) with a central axis (C) and in fluid communication with the reservoir (2) for drawing liquid metal (3) from the reservoir (2) and emitting ions (5) of the liquid metal (3),
an annular extractor (6) coaxial to and facing the emitter (4) for accelerating the ions (5) away from the emitter (4),
a voltage source (7) electrically connected to the emitter (4) and the extractor (6) for effecting said emitting and accelerating, and
a chassis (10) mounting the reservoir (2), the emitter (4) and the extractor (6),
**characterised in that**
the extractor (6), on a side (15) facing the emitter (4), has a structure (14) configured to absorb liquid metal (3)

by means of capillary forces.

2. The ion source according to claim 1, wherein said structure (14) is constituted by a plurality of fins (16) spaced apart from each other to form gaps (17) therebetween.

3. The ion source according to claim 2, wherein the gaps (17) extend radially away from the central axis (C).

4. The ion source according to claim 2 or 3, wherein the width (d) of each gap (17) is constant with increasing distance (D) from the central axis (C).

5. The ion source according to any one of claims 2 to 4, wherein each fin (16) is parallel to the central axis (C).

6. The ion source according to claim 1, wherein said structure (14) is constituted by a plurality of pores (18) in the extractor (6).

7. The ion source according to claim 1, wherein said structure (14) is constituted by a plurality of grooves (19) on the surface (20) of the extractor (6).

8. The ion source according to claim 7, wherein the grooves (19) extend radially away from the central axis (C).

9. The ion source according to claim 7 or 8, wherein the grooves (19) furcate with increasing distance (D) from the central axis (C).

10. The ion source according to any one of claims 1 to 9, wherein an extension (e) of the extractor (6) in axial direction $(x_a)$ increases with increasing distance (D) from the central axis (C).

11. The ion source according to any one of claims 1 to 10, wherein the extractor (6), on said side (15) facing the emitter (4), is rounded when seen transverse to the central axis (C).

12. The ion source according to any one of claims 1 to 11, wherein the emitter (4) has a plurality of sharp-tipped or sharp-edged emission sites (8) arranged axially symmetric and projecting parallel to the central axis (C).

13. The ion source according to any one of claims 1 to 12, wherein the voltage source (7) is switchable between an operating mode (22), in which it applies a first extractor potential to the extractor (6) and a first emitter potential to the emitter (4), and a cleaning mode (24), in which it applies a second extractor potential to the extractor (6) and a second emitter potential to the emitter (4), wherein the first extractor potential is higher than the second extractor potential and the first emitter potential is higher than the second emitter potential, each in relation to a potential of the chassis (10).

14. The ion source according to any one of claims 1 to 13 further comprising a heater, preferably an electric heater, for heating the extractor (6) in a/the cleaning mode (24).

15. A method for operating an ion source (1) according to any one of claims 1 to 14, comprising:

firstly, in an operating mode (22), applying a first extractor potential to the extractor (6) and a first emitter potential to the emitter (4), and
secondly, in a cleaning mode (24), applying a second extractor potential to the extractor (6) and a second emitter potential to the emitter (4),
wherein the first extractor potential is higher than the second extractor potential and the first emitter potential is higher than the second emitter potential, each in relation to a potential of the chassis (10) of the ion source (1).

16. The method of claim 15, wherein the first extractor potential is between -10 kV and 0 V, preferably at -5 kV, the first emitter potential is between +10 kV and +20 kV, preferably at +15 kV, the second extractor potential is between -25 kV and -15 kV, preferably at -20 kV, and the second emitter potential is between -5 kV and +5 kV, preferably at 0 V, each in relation to the potential of the chassis (10).

**Fig. 1a**

(State of the Art)

**Fig. 1b**

(State of the Art)

**Fig. 2**

*(State of the Art)*

**Fig. 7**

**Fig. 3**

**Fig. 4**

**Fig. 5**

**Fig. 6**

**Fig. 8**

**Fig. 9**

| | Europäisches Patentamt<br>European Patent Office<br>Office européen des brevets | **EUROPEAN SEARCH REPORT** | **Application Number**<br>EP 22 20 4071 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | TAJMAR M ET AL: "Liquid-metal-ion source development for space propulsion at ARC", ULTRAMICROSCOPY, ELSEVIER, AMSTERDAM, NL, vol. 109, no. 5, 1 April 2009 (2009-04-01), pages 442-446, XP026029396, ISSN: 0304-3991, DOI: 10.1016/J.ULTRAMIC.2008.10.009 [retrieved on 2008-10-31] * Section 3; pages 443-446; figures 1,2 * | 1-16 | INV.<br>F03H1/00 |
| A | KLAUS TORKAR ET AL: "Active Spacecraft Potential Control for the Magnetospheric Multiscale Mission", IEEE TRANSACTIONS ON PLASMA SCIENCE, IEEE SERVICE CENTER, PISCATAWAY, NJ, US, vol. 40, no. 2, 1 February 2012 (2012-02-01), pages 394-401, XP011408777, ISSN: 0093-3813, DOI: 10.1109/TPS.2011.2178867 * Section V. Key Instrument Parameters; pages 397-399 * | 1-16 | |
| A | SCHARLEMANN C ET AL: "Qualifciation test series of the indium needle FEEP micro-propulsion system for LISA Pathfinder", ACTA ASTRONAUTICA, PERGAMON PRESS, ELMSFORD, GB, vol. 69, no. 9, 31 May 2011 (2011-05-31), pages 822-832, XP028272300, ISSN: 0094-5765, DOI: 10.1016/J.ACTAASTRO.2011.05.037 [retrieved on 2011-06-28] * Section 2. In-FEEP cluster assembly; pages 823-824; figure 1 * | 1-16 | |

**TECHNICAL FIELDS<br>SEARCHED (IPC)**

F03H

The present search report has been drawn up for all claims

| Place of search | Date of completion of the search | Examiner |
|---|---|---|
| The Hague | 5 April 2023 | Rutsch, Gerald |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................................
& : member of the same patent family, corresponding document